# FASCICULE DE BREVET EUROPEEN

(11) **EP 2 820 731 B1**
(45) Date de publication et mention de la délivrance du brevet: **20.04.2016**
(21) Numéro de dépôt: 13706510.8
(22) Date de dépôt: 26.02.2013
(51) Int. Cl.: H02B 13/065

(54) **PROCEDE ET DISPOSITIF DE SURVEILLANCE D'UN COMPARTIMENT D'ISOLATION GAZEUSE**
VERFAHREN UND ANORDNUNG ZUM ÜBERWACHEN EINES GASISOLIERTEN SCHOTTRAUMS
METHOD AND ARRANGEMENT FOR MONITORING A GAS INSULATED COMPARTMENT

(30) Priorité: 28.02.2012 FR 1251799
(43) Date de publication de la demande: 07.01.2015
(73) Titulaire: General Electric Technology GmbH, 5400 Baden (CH)
(72) Inventeur: JUGE, Patrice, F-74150 Marcellaz Albanais (FR)
(74) Mandataire: Brevalex
(86) Numéro de dépôt international: PCT/EP2013/053759
(87) Numéro de publication internationale: WO 2013/127756

(56) Documents cités:
- WO-A1-01/48498
- WO-A1-2009/138506
- DE-A1- 4 108 588
- JP-A- 2001 161 012
- JP-A- 2002 354 618

## Description

### DOMAINE TECHNIQUE

La présente invention concerne la surveillance de compartiment d'isolation gazeuse d'une installation haute tension.

### ÉTAT DE LA TECHNIQUE ANTÉRIEURE

Dans les appareils de connexion électrique à isolation gazeuse, dits GIS d'après l'anglais « Gas Insulated Switchgear » ou dans les lignes à isolation gazeuse, dites GIL d'après l'anglais « Gas Insulated Line », les conducteurs primaires sont constitués de nombreuses pièces en contact et en série.

Chacune de ces pièces est susceptible de se détériorer dans le temps, ce qui se traduit par une augmentation anormale d'impédance. Le passage du courant provoque alors une dissipation d'énergie sous forme de chaleur. Cet échauffement peut conduire à une défaillance de l'installation haute tension.

Il est donc souhaitable de prévenir ce risque en surveillant l'apparition d'une potentielle anomalie.

Il existe des systèmes qui surveillent l'apparition de points chauds, par l'intermédiaire de caméras ou de capteurs de rayons infrarouges (IR). Ces systèmes présentent un certain nombre d'inconvénients.

Ces systèmes sont couteux, en particulier ceux utilisant des caméras IR, et nécessitent de prévoir des hublots en une matière transparente aux rayons infrarouges dans les compartiments à surveiller.

En outre, le gaz le plus utilisé dans les compartiments à isolation gazeuse est l'hexafluorure de soufre SF6 qui présente la propriété d'absorber une raie infrarouge, ce qui fausse la mesure et donc perturbe la détection de point chaud.

Les pièces métalliques qui sont surveillées par ces systèmes nécessitent un traitement de surface spécifique pour favoriser l'émission infrarouge et rendre possible la mesure.

Les capteurs IR sont moins couteux que les caméras IR mais sont plus directifs. Il faut donc en utiliser un plus grand nombre.

Le document JP201161012A divulgue une autre méthode de surveillance de contact dans un compartiment d'une installation haute tension à isolation gazeuse basée sur la mesure de la température du gaz et la détection de produit de décomposition du gaz.

### EXPOSÉ DE L'INVENTION

L'invention vise à résoudre les problèmes de la technique antérieure en fournissant un procédé de surveillance d'un compartiment d'isolation gazeuse d'une installation haute tension, caractérisé en ce qu'il comporte les étapes de :
- Mesure d'un courant dans l'installation, à une fréquence donnée,
- Mesure d'une pression dans le compartiment, à la fréquence donnée,
- Recherche d'un changement d'amplitude de courant, parmi les mesures successives de courant,
et lorsqu'un changement d'amplitude du courant est détecté :
- Détermination d'une pente associée à une courbe des mesures de pression effectuées simultanément au changement d'amplitude du courant,
- Comparaison de la pente déterminée avec une valeur de référence,
et lorsque la différence entre la pente déterminée et la valeur de référence est supérieure à un seuil prédéterminé,
- Création d'une alarme indiquant un fonctionnement anormal dans le compartiment surveillé.

L'invention exploite l'augmentation de la pression de gaz dans un compartiment d'isolation gazeuse lorsque qu'un courant passe dans les conducteurs de ce compartiment. L'homme du métier sait que des paramètres extérieurs comme la température ambiante, le rayonnement solaire la pluie, etc, ont également une influence sur la pression du gaz dans le compartiment. Or les inventeurs ont montré expérimentalement que l'influence de ces paramètres sur la pression est importante, mais pas sur une échelle de temps courte, en raison de l'inertie thermique des équipements.

Les inventeurs ont également montré qu'un changement rapide de niveau de courant en cas de défaillance d'un conducteur dans un compartiment, tel qu'un contact dégradé, se traduit par une augmentation rapide de pression.

Ainsi, le principe de l'invention est de surveiller le niveau de courant et la pression de gaz dans le compartiment. Lorsque le courant change de niveau en un laps de temps suffisamment court, l'augmentation de pression est analysée pour déterminer si elle se produit dans un laps de temps conforme à une norme établie par des valeurs de référence, ou dans un laps de temps inférieur à cette norme. Dans ce dernier cas, une alarme est générée pour alerter un opérateur qui pourra vérifier ensuite le compartiment.

Selon une caractéristique préférée, lorsque la différence entre la pente déterminée et la valeur de référence est inférieure au seuil prédéterminé, le procédé comporte l'étape de mémorisation des données de mesures comme enregistrement de référence, susceptible de fournir ultérieurement une valeur de référence.

La base des enregistrements de référence est ainsi enrichie d'un nouvel enregistrement de référence.

Selon une caractéristique préférée, le procédé de surveillance comporte une phase d'apprentissage comportant les étapes de mesure d'un courant, mesure d'une pression, recherche d'un changement d'amplitude de courant et lorsqu'un changement d'amplitude du courant est détecté, détermination d'une pente associée à une courbe des mesures de pression effectuées simultanément au changement d'amplitude du courant, et une étape de mémorisation des données de mesures de courant, de pression et de pente associées comme enregistrement de référence susceptible de fournir ultérieurement une valeur de référence.

La phase d'apprentissage comporte ainsi des étapes très similaires aux étapes de surveillance proprement dite, et permet d'enregistrer des valeurs de référence qui sont utilisées lors de la surveillance.

Selon une caractéristique préférée, un changement d'amplitude du courant est détecté lorsque le courant est stable à une première valeur pendant au moins une première durée prédéterminée, puis le courant change de valeur en un temps inférieur à une deuxième durée prédéterminée et enfin le courant est stable à une seconde valeur pendant au moins une troisième durée prédéterminée.

Ainsi, un changement d'amplitude est pris en compte dans le cadre de l'invention lorsqu'il est suffisamment rapide et encadré par des périodes où le courant est stable.

Selon une caractéristique préférée, un changement d'amplitude du courant est détecté lorsqu'en outre la différence entre les première et seconde valeurs de courant est supérieure en valeur absolue à un seuil prédéterminé.

Ainsi, un changement d'amplitude est pris en compte dans le cadre de l'invention lorsqu'en outre la variation d'amplitude est suffisamment importante.

Selon une caractéristique préférée, l'étape de comparaison de la différence entre la pente déterminée et une valeur de référence prend comme valeur de référence une pente associée à des valeurs de courant mesurées avant et après changement d'amplitude de courant et à une valeur de pression mesurée avant changement d'amplitude de courant similaires à celles respectives associées à la pente déterminée.

Ainsi la valeur de référence est représentative d'une situation normale dans le compartiment, pour des conditions similaires.

Selon une caractéristique préférée, le procédé de surveillance comporte une étape de mesure de la température ambiante et en ce que si la température ambiante mesurée sort d'une plage prédéfinie, la création d'une alarme est inhibée. Cela permet d'éliminer des résultats correspondants à des conditions extrêmes de température qui affectent la mesure de pression.

L'invention concerne aussi un dispositif de surveillance d'un compartiment d'isolation gazeuse d'une installation haute tension, caractérisé en ce qu'il comporte :
- Un moyen de mesure d'un courant dans l'installation, à une fréquence donnée,
- Un moyen de mesure d'une pression dans le compartiment, à la fréquence donnée,
- Un moyen de recherche d'un changement d'amplitude de courant, parmi les mesures successives de courant,
- Un moyen de détermination d'une pente associée à une courbe des mesures de pression effectuées simultanément à un changement d'amplitude du courant, lorsqu'un changement d'amplitude du courant est détecté
- Un moyen de comparaison de la pente déterminée avec une valeur de référence, et,
- Un moyen de création d'une alarme indiquant un fonctionnement anormal dans le compartiment surveillé lorsque la différence entre la pente déterminée et la valeur de référence est supérieure à un seuil prédéterminé.

Le dispositif selon l'invention comporte des moyens de mise en oeuvre des caractéristiques précédemment exposées et présente des avantages analogues.

Dans un mode particulier de réalisation, les étapes du procédé selon l'invention sont mises en oeuvre par des instructions de programme d'ordinateur.

En conséquence, l'invention vise aussi un programme d'ordinateur sur un support d'informations, ce programme étant susceptible d'être mis en oeuvre dans un ordinateur, ce programme comportant des instructions adaptées à la mise en oeuvre des étapes d'un procédé tel que décrit ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions de programme d'ordinateur.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé selon l'invention.

### BRÈVE DESCRIPTION DES DESSINS

D'autres caractéristiques et avantages apparaîtront à la lecture d'un mode de réalisation préféré donné à titre d'exemple non limitatif, décrit en référence aux figures dans lesquelles :
- La figure 1 représente le schéma électrique équivalent d'une installation électrique haute tension comportant des compartiments à isolation gazeuse,
- La figure 2 représente une courbe d'évolution de la pression de gaz dans un compartiment à isolation gazeuse en fonction du courant,
- La figure 3 représente l'installation électrique comportant des compartiments à isolation gazeuse, munie du dispositif de surveillance des compartiments selon l'invention,
- La figure 4 représente un procédé d'apprentissage selon l'invention,
- La figure 5 représente une vue agrandie d'une partie de la courbe de la figure 2, obtenue dans une phase d'apprentissage selon l'invention,
- La figure 6 représente un procédé de surveillance de compartiment à isolation gazeuse selon l'invention,
- La figure 7 représente une courbe analogue à celle de la figure 5, obtenue dans le cadre de la surveillance de compartiment à isolation gazeuse selon l'invention.

### EXPOSÉ DÉTAILLÉ DE MODES DE RÉALISATION PARTICULIERS

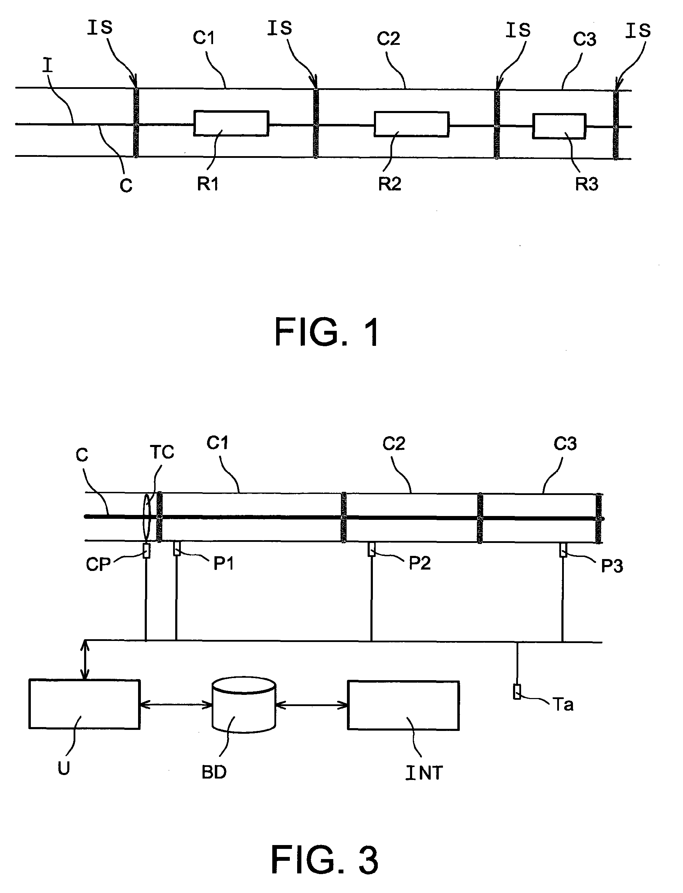

La **figure 1** représente le schéma électrique équivalent d'une installation électrique haute tension comportant des compartiments à isolation gazeuse.

L'installation est monophasée et comporte un conducteur C dans lequel circule un courant I et qui traverse trois compartiments successifs C1, C2 et C3 de tailles différentes. La longueur d'un compartiment peut être de quelques dizaines de centimètres jusqu'à plusieurs dizaines de mètres. Les compartiments comportent une enveloppe métallique et sont séparés les uns des autres par des isolateurs IS qui permettent de rendre étanches les compartiments.

Les isolateurs IS assurent également un rôle de support mécanique pour le conducteur.

Chaque compartiment comporte des résistances qui sont essentiellement des résistances de contact. Les résultantes de ces résistances pour chacun des compartiments sont respectivement notées R1, R2 et R3.

Il est à noter que l'on considère ici plus particulièrement une installation monophasée, mais l'homme du métier comprendra que l'invention s'applique à une installation triphasée. Lorsque l'installation est triphasée, un seul capteur de courant disposé sur une phase est nécessaire à la mise en oeuvre de l'invention. En effet, pour un système triphasé équilibré, les courants ont la même valeur efficace sur les trois phases.

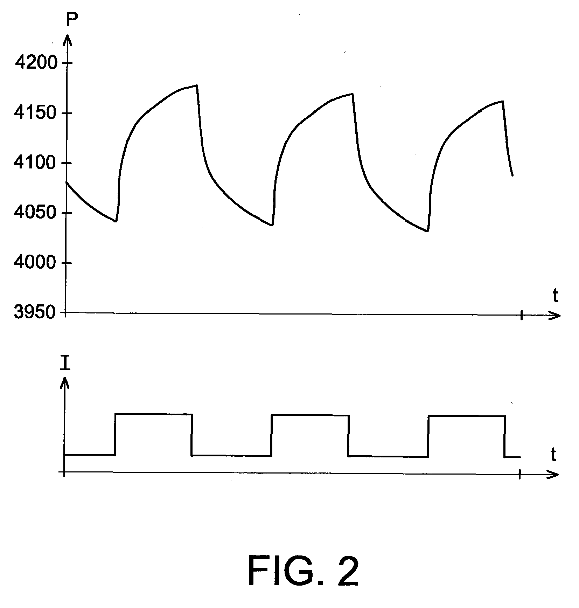

La **figure 2** représente un exemple de courbe d'évolution de la pression de gaz P dans un compartiment à isolation gazeuse lorsque le courant I varie.

Le courant I passe dans le conducteur du compartiment pendant un temps prédéterminé, par exemple 2 heures, et est nul pendant un temps prédéterminé, par exemple à nouveau 2 heures, et ainsi de suite. Le niveau de courant lorsqu'il existe est ici toujours le même. La courbe du courant I en fonction du temps forme des créneaux réguliers.

On voit que la pression de gaz P dans le compartiment augmente lorsqu'il y a un courant dans le conducteur et diminue lorsqu'il n'y a pas de courant.

La pression P dépend donc du courant I, et cela de manière reproductible, toute chose étant égale par ailleurs.

La **figure 3** représente l'installation électrique comportant les compartiments à isolation gazeuse C1, C2 et C3, munie du dispositif de surveillance des compartiments selon l'invention.

Un dispositif de mesure de courant mesure le courant parcourant le conducteur C. La mesure de courant est réalisée par couplage électromagnétique. Le dispositif de mesure de courant comporte ainsi un capteur de courant de type transformateur TC, comportant une bobine disposée autour du conducteur C. Le capteur de courant mesure la valeur efficace du courant. Dans la suite, on parle d'amplitude de courant.

Le capteur de courant est relié à un circuit CP de filtrage et de mise en forme du courant, lui-même relié à une unité U d'acquisition et de traitement des données.

L'unité U d'acquisition et de traitement des données est reliée à une base de données BD qui mémorise les données et à une interface homme machine INT.

Le compartiment C1 est muni d'un capteur P1 de pression de gaz qui est relié à l'unité U d'acquisition et de traitement des données. Le capteur P1 de pression de gaz est de préférence placé sur une interface vanne de traitement de gaz de façon à ne pas être intrusif dans l'installation. Le capteur P1 de pression de gaz dispose d'un microprocesseur et communique de manière numérique avec l'unité d'acquisition et de traitement des données.

De même, chacun des compartiments C2 et C3 est muni d'un capteur de pression de gaz respectif P2 et P3, relié à l'unité d'acquisition et de traitement des données.

Un capteur TA de température ambiante est disposé à proximité des compartiments et est relié à l'unité d'acquisition et de traitement des données. Bien entendu, en fonction de la configuration de l'installation, plusieurs capteurs de température ambiante peuvent être prévus, par exemple un capteur par compartiment.

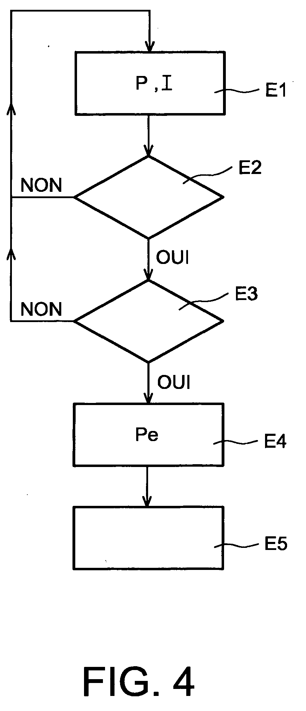

La **figure 4** représente le fonctionnement du dispositif selon l'invention, dans une phase d'apprentissage, sous la forme d'un procédé comportant des étapes E1 à E5. Le procédé est mis en oeuvre compartiment par compartiment. Il est donc décrit dans la suite pour un seul compartiment. La phase d'apprentissage a pour but d'acquérir des valeurs de référence qui sont utilisées ultérieurement pour la surveillance du compartiment.

L'étape E1 est une étape à laquelle sont mesurés la pression de gaz P dans le compartiment et le courant I qui circule dans le conducteur. Ces mesures sont effectuées de manière itérative, par exemple à une fréquence prédéterminée de 10 Hz, et sans interruption au cours de l'apprentissage.

L'étape suivante E2 est un test pour déterminer si des conditions spécifiques sont remplies. Ces conditions concernent l'évolution du courant. Le but est de rechercher un changement d'amplitude de courant, parmi les mesures successives de courant.

Un changement d'amplitude du courant est détecté lorsque le courant est stable à une première valeur pendant au moins une première durée prédéterminée, puis le courant change de valeur en un temps inférieur à une deuxième durée prédéterminée et enfin le courant est stable à une seconde valeur pendant au moins une troisième durée prédéterminée.

Si ces conditions ne sont pas remplies, l'étape E2 est suivie de l'étape E1 précédemment décrite et les mesures de courant et de pression continuent.

Lorsque ces conditions sont remplies, l'étape E2 est suivie de l'étape E3 qui est un test pour déterminer si la variation de courant est supérieure à un seuil prédéterminé.

Si ce n'est pas le cas, l'étape E3 est suivie de l'étape E1 précédemment décrite et les mesures de courant et de pression continuent.

Le but des tests des étapes E2 et E3 est de détecter un changement de courant suffisamment important en amplitude et suffisamment rapide pour pouvoir être exploité dans le cadre de l'invention.

Lorsqu'à l'étape E3 une variation de courant est détectée comme supérieure au seuil prédéterminé, l'étape E3 est suivie de l'étape E4 à laquelle une pente Pe est calculée. La pente Pe est calculée sur le segment linéaire de la courbe de pression à partir de l'instant où le courant varie.

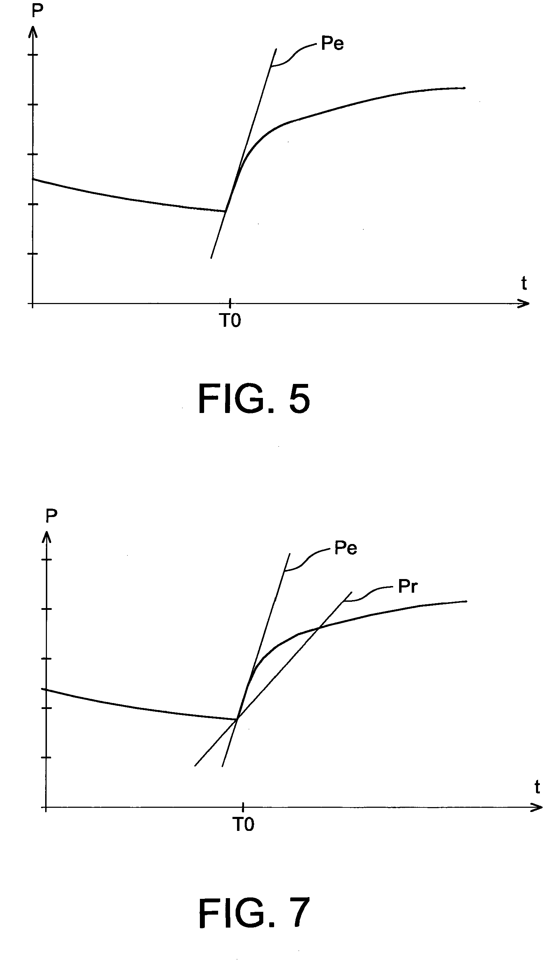

La **figure 5** représente la courbe de pression en fonction du temps, à plus grande échelle que celle de la figure 2. On suppose que le courant varie à partir de l'instant T0. La pente Pe est calculée à partir de cet instant, en approximant la courbe de pression par une droite.

On considère à la figure 5 une augmentation de courant et par conséquent de pression. Cependant, l'invention s'applique de manière identique pour une baisse de courant.

L'étape suivante E5 est la mémorisation de l'évènement sous la forme d'un enregistrement daté comportant les valeurs de courant avant et après changement de niveau, la valeur de la pression avant changement de niveau de courant et la pente Pe calculée. Cet enregistrement est un enregistrement de référence, dont la valeur de pression pourra servir ultérieurement de pression de référence Pr, comme exposé dans la suite.

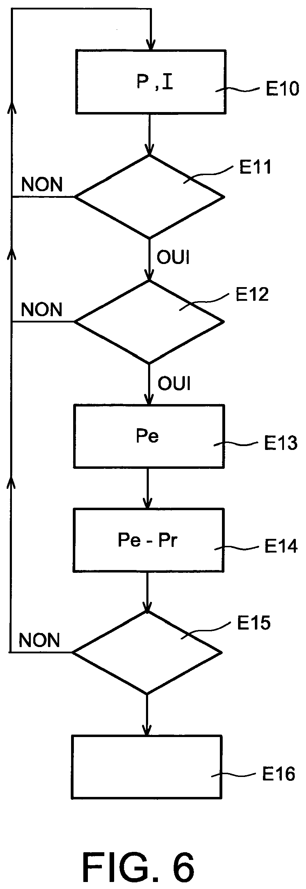

La **figure 6** représente le fonctionnement du dispositif selon l'invention, dans sa phase de surveillance, sous la forme d'un procédé comportant des étapes E10 à E16. Le procédé est mis en oeuvre compartiment par compartiment. Il est donc décrit dans la suite pour un seul compartiment. Les étapes E10 à E13 sont très similaires aux étapes E1 à E4 précédemment décrites.

L'étape E10 est une étape à laquelle sont mesurés la pression de gaz P dans le compartiment et le courant I qui circule dans le conducteur. Ces mesures sont effectuées de manière itérative, par exemple à une fréquence prédéterminée de 10 Hz et sans interruption au cours de la surveillance.

L'étape suivante E11 est un test pour déterminer si des conditions spécifiques sont remplies. Ces conditions concernent l'évolution du courant. Le but est de rechercher un changement d'amplitude de courant, parmi les mesures successives de courant.

Un changement d'amplitude du courant est détecté lorsque le courant est stable à une première valeur pendant au moins une première durée prédéterminée, puis le courant change de valeur en un temps inférieur à une deuxième durée prédéterminée et enfin le courant est stable à une seconde valeur pendant au moins une troisième durée prédéterminée.

Si ces conditions ne sont pas remplies, l'étape E11 est suivie de l'étape E10 précédemment décrite et les mesures de courant et de pression continuent.

Lorsque ces conditions sont remplies, l'étape E11 est suivie de l'étape E12 qui est un test pour déterminer si la variation de courant est supérieure à un seuil prédéterminé.

Si ce n'est pas le cas, l'étape E12 est suivie de l'étape E10 précédemment décrite et les mesures de courant et de pression continuent.

Le but des tests des étapes E11 et E12 est de détecter un changement de courant suffisamment important en amplitude et suffisamment rapide pour pouvoir être exploité dans le cadre de l'invention.

Lorsqu'à l'étape E12 une variation de courant est détectée comme supérieure au seuil prédéterminé, l'étape E12 est suivie de l'étape E13 à laquelle une pente Pe est calculée. La pente Pe est calculée sur le segment linéaire de la courbe de pression à partir de l'instant où le courant varie.

L'étape suivante E14 est une comparaison de la pente Pe calculée précédemment avec une pente de référence Pr. La pente de référence Pr est choisie parmi des valeurs mémorisées pendant la phase d'apprentissage. De préférence, la pente de référence est une pente associée à des valeurs de courant mesurées avant et après changement d'amplitude de courant et à une valeur de pression mesurée avant changement d'amplitude de courant similaires à celles respectives associées à la pente Pe déterminée à l'étape E13.

L'étape suivante E15 est un test pour déterminer si la différence entre la pente calculée Pe et la pente de référence Pr est supérieure à un seuil prédéterminé.

Si la réponse est négative, cela signifie que la pente calculée est peu différente de la pente de référence. Il n'y a alors pas d'anomalie et l'étape E15 est suivie de l'étape E10 de mesure de la pression et du courant, précédemment décrite.

En raison de la similitude des étapes E1 à E4 d'une part et E10 à E13 d'autre part, les résultats de mesure ainsi que la pente calculée peuvent être mémorisés comme nouvel enregistrement de référence. Ainsi, la base des enregistrements de référence déterminés lors de la phase d'apprentissage est enrichie.

Lorsque la réponse est positive à l'étape E15, cela signifie que la pente calculée Pe est plus forte que la pente de référence Pr, et ce d'autant plus que le seuil de comparaison est grand. La pression a donc augmenté nettement plus rapidement que pour l'enregistrement de référence. La **figure 7** représente un cas où la pente Pe est supérieure à la pente de référence Pr. Il y a alors une anomalie dans le compartiment. L'étape E15 est suivie de l'étape E16 qui est la génération d'une alarme destinée à un opérateur. L'alarme peut être visuelle ou sonore par exemple. Elle peut être générée à l'aide de l'interface homme-machine INT.

De préférence, la température ambiante est mesurée et si la température ambiante mesurée sort d'une plage prédéfinie, la création d'une alarme est inhibée. En effet, en cas de température ambiante extrême, les mesures de pression sont perturbées et les valeurs mesurées peuvent ne pas être représentatives d'une anomalie.

On considère à la figure 7 une augmentation de courant et par conséquent de pression. Cependant, l'invention s'applique de manière identique pour une baisse de courant.

## Revendications

1. Procédé de surveillance d'un compartiment d'isolation gazeuse d'une installation haute tension, **caractérisé en ce qu'**il comporte les étapes de :
- Mesure (E10) d'un courant dans l'installation, à une fréquence donnée,
- Mesure (E10) d'une pression dans le compartiment, à la fréquence donnée,
- Recherche (E11, E12) d'un changement d'amplitude de courant, parmi les mesures successives de courant,
et lorsqu'un changement d'amplitude du courant est détecté :
- Détermination (E13) d'une pente associée à une courbe des mesures de pression effectuées simultanément au changement d'amplitude du courant,
- Comparaison (E14, E15) de la pente déterminée avec une valeur de référence,
et lorsque la différence entre la pente déterminée et la valeur de référence est supérieure à un seuil prédéterminé,
- Création (E16) d'une alarme indiquant un fonctionnement anormal dans le compartiment surveillé.

2. Procédé de surveillance d'un compartiment d'isolation gazeuse d'une installation haute tension selon la revendication 1, **caractérisé en ce que**, lorsque la différence entre la pente déterminée et la valeur de référence est inférieure au seuil prédéterminé, il comporte l'étape de mémorisation des données de mesures comme enregistrement de référence, susceptible de fournir ultérieurement une valeur de référence.

3. Procédé de surveillance d'un compartiment d'isolation gazeuse d'une installation haute tension selon la revendication 1 ou 2, **caractérisé en ce qu'**il comporte une phase d'apprentissage comportant les étapes de mesure (E1) d'un courant, mesure (E1) d'une pression, recherche (E2, E3) d'un changement d'amplitude de courant et lorsqu'un changement d'amplitude du courant est détecté, détermination (E4) d'une pente associée à une courbe des mesures de pression effectuées simultanément au changement d'amplitude du courant, et une étape de mémorisation (E5) des données de mesures de courant, de pression et de pente associées comme enregistrement de référence susceptible de fournir ultérieurement une valeur de référence.

4. Procédé de surveillance d'un compartiment d'isolation gazeuse d'une installation haute tension selon l'une quelconque des revendications 1 à 3, **caractérisé en ce qu'**un changement d'amplitude du courant est détecté (E2, E11) lorsque le courant est stable à une première valeur pendant au moins une première durée prédéterminée, puis le courant change de valeur en un temps inférieur à une deuxième durée prédéterminée et enfin le courant est stable à une seconde valeur pendant au moins une troisième durée prédéterminée.

5. Procédé de surveillance d'un compartiment d'isolation gazeuse d'une installation haute tension selon les revendications 4, **caractérisé en ce qu'**un changement d'amplitude du courant est détecté (E3, E12) lorsqu'en outre la différence entre les première et seconde valeurs de courant est supérieure en valeur absolue à un seuil prédéterminé.

6. Procédé de surveillance d'un compartiment d'isolation gazeuse d'une installation haute tension selon l'une quelconque des revendications 1 à 5, **caractérisé en ce que** l'étape de comparaison (E14) de la différence entre la pente déterminée et une valeur de référence prend comme valeur de référence une pente associée à des valeurs de courant mesurées avant et après changement d'amplitude de courant et à une valeur de pression mesurée avant changement d'amplitude de courant similaires à celles respectives associées à la pente déterminée.

7. Procédé de surveillance d'un compartiment d'isolation gazeuse d'une installation haute tension selon l'une quelconque des revendications 1 à 6, **caractérisé en ce qu'**il comporte une étape de mesure de la température ambiante et **en ce que** si la température ambiante mesurée sort d'une plage prédéfinie, la création d'une alarme est inhibée.

8. Dispositif de surveillance d'un compartiment (C1, C2, C3) d'isolation gazeuse d'une installation haute tension, **caractérisé en ce qu'**il comporte :
- Un moyen (TC) de mesure d'un courant dans l'installation, à une fréquence donnée,
- Un moyen (P1, P2, P3) de mesure d'une pression dans le compartiment, à la fréquence donnée,
- Un moyen (U) de recherche d'un changement d'amplitude de courant, parmi les mesures successives de courant,
- Un moyen (U) de détermination d'une pente associée à une courbe des mesures de pression effectuées simultanément à un changement d'amplitude du courant, lorsqu'un changement d'amplitude du courant est détecté
- Un moyen (U) de comparaison de la pente déterminée avec une valeur de référence, et,
- Un moyen (U) de création d'une alarme indiquant un fonctionnement anormal dans le compartiment surveillé lorsque la différence entre la pente déterminée et la valeur de référence est supérieure à un seuil prédéterminé.

9. Dispositif de surveillance d'un compartiment d'isolation gazeuse d'une installation haute tension selon la revendication 8, **caractérisé en ce qu'**il comporte un moyen (BD) de mémorisation des données de mesures comme enregistrement de référence, susceptible de fournir ultérieurement une valeur de référence, lorsque la différence entre la pente déterminée et la valeur de référence est inférieure au seuil prédéterminé.

10. Dispositif de surveillance d'un compartiment d'isolation gazeuse d'une installation haute tension selon la revendication 8 ou 9, **caractérisé en ce que** les moyens de mesure d'un courant, mesure d'une pression, recherche d'un changement d'amplitude de courant et détermination d'une pente associée à une courbe des mesures de pression effectuées simultanément au changement d'amplitude du courant, lorsqu'un changement d'amplitude du courant est détecté, sont utilisés dans une phase d'apprentissage et **en ce qu'**il comporte un moyen (BD) de mémorisation des données de mesures de courant, de pression et de pente associées comme enregistrement de référence susceptible de fournir ultérieurement une valeur de référence.

11. Dispositif de surveillance d'un compartiment d'isolation gazeuse d'une installation haute tension selon l'une quelconque des revendications 8 à 10, **caractérisé en ce que** le moyen de recherche d'un changement d'amplitude de courant est adapté pour détecter un changement d'amplitude du courant lorsque le courant est stable à une première valeur pendant au moins une première durée prédéterminée, puis le courant change de valeur en un temps inférieur à une deuxième durée prédéterminée et enfin le courant est stable à une seconde valeur pendant au moins une troisième durée prédéterminée.

12. Dispositif de surveillance d'un compartiment d'isolation gazeuse d'une installation haute tension selon les revendications 11, **caractérisé en ce que** le moyen de recherche d'un changement d'amplitude de courant est en outre adapté pour détecter un changement d'amplitude du courant lorsque la différence entre les première et seconde valeurs de courant est supérieure en valeur absolue à un seuil prédéterminé.

13. Dispositif de surveillance d'un compartiment d'isolation gazeuse d'une installation haute tension selon l'une quelconque des revendications 8 à 12, **caractérisé en ce que** le moyen de comparaison de la différence entre la pente déterminée et une valeur de référence est adapté pour prendre comme valeur de référence une pente associée à des valeurs de courant mesurées avant et après changement d'amplitude de courant et à une valeur de pression mesurée avant changement d'amplitude de courant similaires à celles respectives associées à la pente déterminée.

14. Dispositif de surveillance d'un compartiment d'isolation gazeuse d'une installation haute tension selon l'une quelconque des revendications 8 à 13, **caractérisé en ce qu'**il comporte un moyen de mesure de la température ambiante et **en ce que** si la température ambiante mesurée sort d'une plage prédéfinie, le moyen de création d'une alarme est inhibé.

15. Programme d'ordinateur comportant des instructions pour l'exécution des étapes du procédé selon l'une quelconque des revendications 1 à 7 lorsque ledit programme est exécuté par un ordinateur.

16. Support d'enregistrement lisible par un ordinateur sur lequel est enregistré un programme d'ordinateur comprenant des instructions pour l'exécution des étapes du procédé selon l'une quelconque des revendications 1 à 7.

## Patentansprüche

1. Verfahren zur Überwachung einer gasisolierten Kammer einer Hochspannungsanlage, **dadurch gekennzeichnet, dass** es die folgende Schritte umfasst:
- Messen (E10) eines Stroms in der Anlage mit einer gegebenen Frequenz,
- Messen (E10) eines Drucks in der Kammer mit der gegebenen Frequenz,
- Suchen (E11, E12) nach einer Amplitudenänderung des Stroms in den aufeinanderfolgenden Strommessungen,
und wenn eine Amplitudenänderung des Stroms erfasst wird:
- Bestimmen (E13) einer Steigung, die einer Kurve der Druckmessungen zugeordnet ist, welche gleichzeitig mit der Amplitudenänderung des Stroms durchgeführt wurden,
- Vergleichen (E14, E15) der bestimmten Steigung mit einem Referenzwert, und wenn die Differenz zwischen der bestimmten Steigung und dem Referenzwert größer als eine vorbestimmte Schwelle ist,
- Erzeugen (E16) eines Alarms, der eine anormale Funktion in der überwachten Kammer anzeigt.

2. Verfahren zur Überwachung einer gasisolierten Kammer einer Hochspannungsanlage nach Anspruch 1, **dadurch gekennzeichnet, dass** dann, wenn die Differenz zwischen der bestimmten Steigung und dem Referenzwert kleiner als die vorbestimmte Schwelle ist, es den Schritt des Abspeicherns der Messdaten als Referenzaufzeichnung umfasst, die dazu ausgelegt ist, später einen Referenzwert zu liefern.

3. Verfahren zur Überwachung einer gasisolierten Kammer einer Hochspannungsanlage nach Anspruch 1 oder 2, **dadurch gekennzeichnet, dass** es eine Lernphase umfasst, umfassend die Schritte des Messens (E1) eines Stroms, des Messens (E1) eines Drucks, des Suchens (E2, E3) nach einer Amplitudenänderung des Stroms und, wenn eine Amplitudenänderung des Stroms erfasst wird, des Bestimmens (E4) einer Steigung, die einer Kurve der Druckmessungen zugeordnet ist, die gleichzeitig mit der Amplitudenänderung des Stroms durchgeführt wurden, sowie einen Schritt des Abspeicherns der zugeordneten Strom-,Druck- und Steigungsmessdaten als Referenzaufzeichnung, die dazu ausgelegt ist, später einen Referenzwert zu liefern.

4. Verfahren zur Überwachung einer gasisolierten Kammer einer Hochspannungsanlage nach einem der Ansprüche 1 bis 3, **dadurch gekennzeichnet, dass** eine Amplitudenänderung des Stroms erfasst wird (E2, E11), wenn der Strom während wenigstens einer ersten vorbestimmten Dauer stabil bei einem ersten Wert ist, der Strom dann in einer Zeit kleiner als eine zweite vorbestimmte Dauer seinen Wert ändert, und der Strom schließlich während wenigstens einer dritten vorbestimmten Dauer stabil bei einem zweiten Wert ist.

5. Verfahren zur Überwachung einer gasisolierten Kammer einer Hochspannungsanlage nach Anspruch 4, **dadurch gekennzeichnet, dass** eine Amplitudenänderung des Stroms erfasst wird (E3, E12), wenn ferner die Differenz zwischen dem ersten und dem zweiten Stromwert betragsmäßig größer als eine vorbestimmte Schwelle ist.

6. Verfahren zur Überwachung einer gasisolierten Kammer einer Hochspannungsanlage nach einem der Ansprüche 1 bis 5, **dadurch gekennzeichnet, dass** der Schritt des Vergleichens (E14) der Differenz zwischen der vorbestimmten Steigung und einem Referenzwert als Referenzwert eine Steigung heranzieht, die Stromwerten zugeordnet ist, welche vor und nach der Amplitudenänderung des Stroms gemessen sind, sowie einem Druckwert, der vor der Amplitudenänderung des Stroms gemessen ist, ähnlich jenen, die jeweils der bestimmten Steigung zugeordnet sind.

7. Verfahren zur Überwachung einer gasisolierten Kammer einer Hochspannungsanlage nach einem der Ansprüche 1 bis 6, **dadurch gekennzeichnet, dass** es einen Schritt des Messens der Umgebungstemperatur umfasst, und dass dann, wenn die gemessene Umgebungstemperatur außerhalb eines vordefinierten Bereichs liegt, die Erzeugung eines Alarms gehemmt wird.

8. Vorrichtung zur Überwachung einer gasisolierten Kammer (C1, C2, C3) einer Hochspannungsanlage, **dadurch gekennzeichnet, dass** sie umfasst:
- Eine Einrichtung (TC) zum Messen eines Stroms in der Anlage mit einer gegebenen Frequenz,
- eine Einrichtung (P1, P2, P3) zum Messen eines Drucks in der Kammer mit der gegebenen Frequenz,
- eine Einrichtung (U) zum Suchen nach einer Amplitudenänderung des Stroms in den aufeinanderfolgenden Strommessungen,
- eine Einrichtung (U) zur Bestimmung einer Steigung, die einer Kurve von Druckmessungen zugeordnet ist, welche gleichzeitig mit einer Amplitudenänderung des Stroms durchgeführt wurden, wenn eine Amplitudenänderung des Stroms erfasst wird,
- eine Einrichtung (U) zum Vergleichen der bestimmten Steigung mit einem Referenzwert, und
- eine Einrichtung (U) zum Erzeugen eines Alarms, der eine anormale Funktion in der überwachten Kammer anzeigt, wenn die Differenz zwischen der bestimmten Steigung und dem Referenzwert größer als eine vorbestimmte Schwelle ist.

9. Vorrichtung zur Überwachung einer gasisolierten Kammer einer Hochspannungsanlage nach Anspruch 8, **dadurch gekennzeichnet, dass** sie eine Einrichtung (BD) zum Abspeichern der Messdaten als Referenzaufzeichnung umfasst, die dazu ausgelegt ist, später einen Referenzwert zu liefern, wenn die Differenz zwischen der bestimmten Steigung und dem Referenzwert kleiner als die vorbestimmte Schwelle ist.

10. Vorrichtung zur Überwachung einer gasisolierten Kammer einer Hochspannungsanlage nach Anspruch 8 oder 9, **dadurch gekennzeichnet, dass** die Einrichtungen zum Messen eines Stroms, Messen eines Drucks, Suchen nach einer Amplitudenänderung des Stroms und Bestimmen einer Steigung, die einer Kurve von Druckmessungen zugeordnet ist, welche gleichzeitig mit der Amplitudenänderung des Stroms durchgeführt wurden, wenn eine Amplitudenänderung des Stroms erfasst wird, in einer Lernphase verwendet werden, und dass sie eine Einrichtung (BD) zum Abspeichern der zugeordneten Strom-,Druck- und Steigungsmessdaten als Referenzaufzeichnung umfasst, die dazu ausgelegt ist, später einen Referenzwert zu liefern.

11. Vorrichtung zur Überwachung einer gasisolierten Kammer einer Hochspannungsanlage nach einem der Ansprüche 8 bis 10, **dadurch gekennzeichnet, dass** die Einrichtung zum Suchen nach einer Amplitudenänderung des Stroms dazu ausgelegt ist, eine Amplitudenänderung des Stroms zu erfassen, wenn der Strom während wenigstens einer ersten vorbestimmten Dauer stabil bei einem ersten Wert ist, der Strom dann in einer Zeit kleiner als eine zweite vorbestimmte Dauer seinen Wert ändert, und der Strom schließlich während wenigstens einer dritten vorbestimmten Dauer stabil bei einem zweiten Wert ist.

12. Vorrichtung zur Überwachung einer gasisolierten Kammer einer Hochspannungsanlage nach Anspruch 11, **dadurch gekennzeichnet, dass** die Einrichtung zum Suchen nach einer Amplitudenänderung des Stroms ferner dazu ausgelegt ist, eine Amplitudenänderung des Stroms zu erfassen, wenn die Differenz zwischen dem ersten und dem zweiten Stromwert betragsmäßig größer als eine vorbestimmte Schwelle ist.

13. Vorrichtung zur Überwachung einer gasisolierten Kammer einer Hochspannungsanlage nach einem der Ansprüche 8 bis 12, **dadurch gekennzeichnet, dass** die Einrichtung zum Vergleichen der Differenz zwischen der bestimmten Steigung und einem Referenzwert dazu ausgelegt ist, als Referenzwert eine Steigung heranzuziehen, die Strommessungen zugeordnet ist, welche vor und nach der Amplitudenänderung des Stroms gemessen sind, sowie einem Druckwert, der vor der Amplitudenänderung des Stroms gemessen ist, ähnlich jenen, die jeweils der bestimmten Steigung zugeordnet sind.

14. Vorrichtung zur Überwachung einer gasisolierten Kammer einer Hochspannungsanlage nach einem der Ansprüche 8 bis 13, **dadurch gekennzeichnet, dass** sie eine Einrichtung zum Messen der Umgebungstemperatur umfasst, und dass dann, wenn die gemessene Umgebungstemperatur außerhalb eines vordefinierten Bereichs liegt, die Einrichtung zur Erzeugung eines Alarms gehemmt wird.

15. Computerprogramm, umfassend Anweisungen für die Durchführung der Schritte des Verfahrens nach einem der Ansprüche 1 bis 7, wenn das Programm durch einen Computer ausgeführt wird.

16. Computerlesbarer Aufzeichnungsträger, auf dem ein Computerprogramm aufgezeichnet ist, das Anweisungen für die Durchführung der Schritte des Verfahrens nach einem der Ansprüche 1 bis 7 umfasst.

## Claims

1. A method of monitoring a gas-insulated compartment in a high-voltage installation, the method being **characterized in that** it comprises the steps of:
· measuring (E10) a current in the installation, at a given frequency;
· measuring (E10) a pressure in the compartment, at the given frequency;
· searching (E11, E12) for a change in the amplitude of the current among the successive current measurements; and
when a change in the amplitude of the current is detected:
· determining (E13) a slope associated with a curve of the pressure measurements performed simultaneously with the change in the amplitude of the current;
· comparing (E14, E15) the determined slope with a reference value; and when the difference between the determined slope and the reference value is greater than a predetermined threshold:
· creating (E16) an alarm indicating abnormal operation in the monitored compartment.

2. A method of monitoring a gas-insulated compartment of a high-voltage installation according to claim 1, **characterized in that**, when the difference between the determined slope and the reference value is less than the predetermined threshold, it comprises the step of storing measurement data as a reference recording, suitable for providing a reference value at a later time.

3. A method of monitoring a gas-insulated compartment of a high-voltage installation according to claim 1 or claim 2, **characterized in that** it includes a training stage comprising the steps of measuring (E1) a current, measuring (E1) a pressure, searching (E2, E3) for a change in the amplitude of the current, and when a change in the amplitude of the current is detected, determining (E4) a slope associated with a curve of the pressure measurements performed simultaneously with the change in the amplitude of the current, and a step of storing (E5) associated current, pressure, and slope measurement data as a reference recording, suitable for providing a reference value at a later time.

4. A method of monitoring a gas-insulated compartment of a high-voltage installation according to any one of claims 1 to 3, **characterized in that** a change in the amplitude of the current is detected (E2, E11) when the current has been stable at a first value for at least a first predetermined duration, and then the value of the current changes over a length of time that is less than a second predetermined duration, and finally the current is stable at a second value for at least a third predetermined duration.

5. A method of monitoring a gas-insulated compartment of a high-voltage installation according to claim 4, **characterized in that** a change in the amplitude of the current is also detected (E3, E12) when the difference between the first and second current values is greater in absolute value than a predetermined threshold.

6. A method of monitoring a gas-insulated compartment of a high-voltage installation according to any one of claims 1 to 5, **characterized in that** the step of comparing (E14) the difference between the determined slope and a reference value takes as its reference value a slope associated with current values as measured before and after a change in the amplitude of the current and at a pressure value as measured before the change in the amplitude of the current, said values being similar to the respective values associated with the determined slope.

7. A method of monitoring a gas-insulated compartment of a high-voltage installation according to any one of claims 1 to 6, **characterized in that** it includes a step of measuring the ambient temperature and **in that** if the measured ambient temperature is outside a predefined range, creation of an alarm is disabled.

8. A device for monitoring a gas-insulated compartment (C1, C2, C3) in a high-voltage installation, the device being **characterized in that** it comprises:
· means (TC) for measuring a current in the installation, at a given frequency;
· means (P1, P2, P3) for measuring a pressure in the compartment, at the given frequency;
· means (U) for searching for a change in the amplitude of the current among the successive current measurements;
· means (U) for determining a slope associated with a curve of the pressure measurements performed simultaneously with the change in the amplitude of the current, when a change in the amplitude of the current is detected;
· means (U) for comparing the determined slope with a reference value; and
· means (U) for creating an alarm indicating abnormal operation in the monitored compartment when the difference between the determined slope and the reference value is greater than a predetermined threshold.

9. A device for monitoring a gas-insulated compartment of a high-voltage installation according to claim 8, the device being **characterized in that** it comprises means (BD) for storing measurement data as a reference recording, suitable for providing a reference value at a later time, when the difference between the determined slope and the reference value is less than the predetermined threshold.

10. A device for monitoring a gas-insulated compartment of a high-voltage installation according to claim 8 or claim 9, **characterized in that** the means for measuring a current, measuring a pressure, searching for a change in the amplitude of the current, and determining a slope associated with a curve of the pressure measurements performed simultaneously with the change in the amplitude of the current, when a change in the amplitude of the current is detected, are used in a training stage, and **in that** the device includes means (BD) for storing associated current, pressure, and slope measurement data as a reference recording, suitable for providing a reference value at a later time.

11. A device for monitoring a gas-insulated compartment of a high-voltage installation according to any one of claims 8 to 10, **characterized in that** the means for searching for a change in the amplitude of the current are adapted in order to detect a change in the amplitude of the current when the current has been stable at a first value for at least a first predetermined duration, and then the value of the current changes over a length of time that is less than a second predetermined duration, and finally the current is stable at a second value for at least a third predetermined duration.

12. A device for monitoring a gas-insulated compartment of a high-voltage installation according to claim 11, **characterized in that** the means for searching for a change in the amplitude of the current are further adapted in order to detect a change in the amplitude of the current when the difference between the first and second current values is greater in absolute value than a predetermined threshold.

13. A device for monitoring a gas-insulated compartment of a high-voltage installation according to any one of claims 8 to 12, **characterized in that** the means for comparing the difference between the determined slope and a reference value are adapted in order to take as their reference value a slope associated with current values as measured before and after a change in the amplitude of the current and at a pressure value as measured before the change in the amplitude of the current, said values being similar to the respective values associated with the determined slope.

14. A device for monitoring a gas-insulated compartment of a high-voltage installation according to any one of claims 8 to 13, **characterized in that** it includes means for measuring the ambient temperature and **in that** if the measured ambient temperature is outside a predefined range, the means for creating an alarm are disabled.

15. A computer program comprising instructions for executing steps of the method according to any one of claims 1 to 7 when said program is executed by a computer.

16. A computer-readable recording medium having recorded thereon a computer program including instructions for executing the steps of the method according to any one of claims 1 to 7.
